# EUROPÄISCHE PATENTANMELDUNG

(11) **EP 1 580 414 A2**
(43) Veröffentlichungstag der Anmeldung: **28.09.2005**
(21) Anmeldenummer: 05102045.1
(22) Anmeldetag: 15.03.2005
(51) Int. Cl.: F02C 7/12

(54) **Komponente einer Turbomaschine mit einer Kühlanordnung**

(30) Priorität: 23.03.2004 DE 102004014117
(71) Anmelder: Alstom Technology Ltd, 5400 Baden (CH)
(72) Erfinder: Rathmann, Ulrich, 5400, Baden (CH); Schulz, Ingolf, 5400, Baden (CH)

(57) **Zusammenfassung**

Die vorliegende Erfindung betrifft eine Komponente (1) einer Turbomaschine, insbesondere ein Hitzeschildsegment einer Gasturbine, mit einer Kühlanordnung, die zumindest einen Kühlkanal zur Durchführung eines Kühlmediums an oder in der Komponente (1) aufweist. Die Komponente (1) zeichnet sich dadurch aus, dass der Kühlkanal durch ein Rohr (2) mit einem Innendurchmesser von ≥ 4mm gebildet wird, das an der Komponente (1) befestigt ist.

Mit der vorliegenden Komponente lassen sich einzelne Bereiche der Komponente bei reduzierter Leckrate des Kühlmediums gezielt kühlen.

## Beschreibung

### Technisches Anwendungsgebiet

Die vorliegende Erfindung betrifft eine Komponente einer Turbomaschine, insbesondere einer Gasturbine, mit einer Kühlanordnung, die zumindest einen Kühlkanal zur Durchführung eines Kühlmediums an oder in der Komponente aufweist.

Beim Betrieb von Turbomaschinen, insbesondere Gasturbinen, treten hohe Temperaturen auf, die einzelne Komponenten der Turbine stark belasten. Mit der Entwicklung immer leistungsfähigerer Gasturbinen werden Temperaturen erreicht, die bereits den Schmelzpunkt des Materials einzelner Turbinenkomponenten überschreiten. Zur Vermeidung von Schäden an diesen Komponenten aufgrund der hohen Betriebstemperaturen müssen diese während des Betriebs ständig gekühlt werden. Hierfür sind Kühlkanäle innerhalb dieser Turbinenkomponenten vorgesehen, über die ein Kühlmedium, in der Regel angesaugte Verdichterluft, an den zu kühlenden Stellen vorbeigeführt wird. Neben der konvektiven Kühlung, bei der die Kühlkanäle direkt an den zu kühlenden Bereichen verlaufen, bspw. in Kühlkanälen innerhalb eines Schaufelblattes, werden auch die Prallkühlung sowie die Filmkühlung eingesetzt. Bei der Prallkühlung prallt die Kühlluft annähernd senkrecht auf die zu kühlende Fläche, während sie bei der Filmkühlung annähernd tangential über diese Fläche streift und dort einen dünnen Kühlluftfilm ausbildet.

Die durch die Kühlkanäle gebildeten Kühlanordnungen stellen in der Regel offene Systeme dar, bei denen das Medium über Bohrungen oder Öffnungen von einer Kavität in eine andere Kavität der selben oder einer anderen Komponente strömt. Dies kann allerdings aufgrund der ausgedehnten Begrenzungsflächen zu hohen Leckraten des Kühlmediums führen.

Ein Beispiel für zu kühlende Komponenten sind Hitzeschildsegmente, die die äußere Trägerstruktur der Turbine, bspw. den Träger für die Turbinenleitschaufeln, vor dem direkten Kontakt mit dem Heißgas schützen. Abhängig vom Legierungsmaterial des Hitzeschildes, von den im Betrieb auftretenden Temperaturen sowie vom Design kann es erforderlich sein, das Hitzeschild zu kühlen oder nicht. Für die Kühlung einer derartigen Komponente einer Gasturbine werden bei bekannten Systemen die bereits genannten Kühlanordnungen eingesetzt, bei denen die Kühlluft über durch die Komponenten oder das Zusammenwirken der Komponenten der Turbinenanlage gebildete Kavitäten und Verbindungsöffnungen, insbesondere Kühlluftbohrungen, strömt. Dabei werden auch die Begrenzungsflächen der Kavitäten aufgrund der durchströmenden Kühlluft gekühlt, auch wenn dies nicht oder nicht in dem gesamten Bereich der Komponente erwünscht ist.

### Darstellung der Erfindung

Die Aufgabe der vorliegenden Erfindung besteht darin, eine Komponente einer Turbomaschine, insbesondere Gasturbine, mit einer Kühlanordnung bereitzustellen, die eine gezieltere Kühlung bei geringerer Leckrate ermöglicht.

Die Aufgabe wird mit einer Komponente einer Turbomaschine gemäß Patentanspruch 1 gelöst. Vorteilhafte Ausgestaltungen der Komponente sind Gegenstand der Unteransprüche oder lassen sich der nachfolgenden Beschreibung sowie den Ausführungsbeispielen entnehmen.

Die vorgeschlagene Komponente einer Turbomaschine mit einer Kühlanordnung, die zumindest einen Kühlkanal zur Durchführung eines Kühlmediums an oder in der Komponente aufweist, zeichnet sich dadurch aus, dass der Kühlkanal durch ein Rohr mit einem Innendurchmesser von ≥ 4 mm gebildet wird, das an der Komponente befestigt ist.

Im Gegensatz zu bekannten Lösungen, bei denen Kühlkanäle durch die Ausformung der Komponente selbst, insbesondere durch in der Komponente oder in Zusammenwirkung mit einer benachbarten Komponente gebildete Kavitäten, ggf. mit einer entsprechenden Anordnung von Stegen, gebildet werden, umfasst die vorliegende Komponente separat hergestellte und geformte Rohre, die an oder in der Komponente befestigt sind. Die Befestigung kann dabei beispielsweise durch Hartlöten, Schweißen oder Kleben oder durch jede andere geeignete mechanische Verbindung erfolgen. Die Komponente selbst kann beispielsweise ein Hitzeschildsegment darstellen, jedoch auch jede andere zu kühlende rotierende oder statische Komponente einer Turbomaschine, bei der nur ein lokaler begrenzter Bereich gekühlt oder das Kühlmedium lediglich durch die Komponente hindurch in die Kühlanordnung einer anderen zu kühlenden Komponente geführt werden soll, das heisst, in ein sekundäres Kühlsystem münden soll.

Mit der vorliegenden Komponente wird die gezielte Kühlung nur eines Teils dieser Komponente oder der Transport des Kühlmediums ohne Kühlung der Komponente in ein sekundäres Kühlsystem ermöglicht. Ausgedehnte Begrenzungsflächen für die Führung des Kühlmediums werden hierbei vermieden, so dass eine gegenüber bekannten Lösungen verringerte Leckrate resultiert. Gerade Hitzeschildsegmente, die zusätzlich eine mechanische Funktion, bspw. für die Befestigung der Leitschaufeln, aufweisen, haben auch eine nennenswerte radiale Ausdehnung. Die durch großflächigen Kontakt mit dem Kühlmedium hervorgerufenen Temperaturgradienten sind sehr hoch und führen zu unerwünscht starken thermischen Verformungen dieses Teils. Durch die Ausgestaltung eines derartigen Hitzeschildes gemäß der vorliegenden Erfindung ist es möglich, das Kühlmedium ausschließlich an die zu kühlenden Flächen nahe des Heißgaspfades zu führen, ohne die radial weiter außen liegenden Bereiche des Hitzeschildes nennenswert zu kühlen.

In einer bevorzugten Ausgestaltung sind die ein oder mehreren Rohre der Kühlanordnung zumindest abschnittsweise flexibel oder elastisch ausgestaltet, um thermisch bedingte Ausdehnungsschwankungen der Komponente mitzumachen bzw. ausgleichen zu können. Hierfür bieten sich mehrere Möglichkeiten an. So können die Rohre eine mehrfach gekrümmte oder gewundene Form aufweisen, insbesondere auch helix- oder spiralförmig verlaufen. Weiterhin können einzelne Abschnitte der Rohre Faltenbalge bilden, so dass eine Flexibilität in überwiegend axialer Richtung der Rohre erreicht wird. In einer weiteren Ausgestaltung können Verbindungsstellen der Rohre mit der Komponente, insbesondere an Stellen, an denen die Rohre durch eine Wandung der Komponente hindurchgeführt sind, mit Schiebegelenken verbunden sein. Eine derartige Durchführung kann auch mit einer zusätzlichen Dichtung versehen sein. Weiterhin ist es möglich, die Rohre in der Komponente aus mehreren Rohrteilen zu montieren. In diesem Falle ist der Einsatz von Schiebegelenken auch als Verbindung zwischen den einzelnen Rohrteilen möglich.

Die Komponente auf der einen Seite sowie das oder die Rohre der Kühlanordnung auf der anderen Seite können mit unterschiedlichen Techniken unabhängig voneinander hergestellt werden, bspw. durch Gießen, durch spanende Formgebung, durch Halbwarm- oder Kaltformung oder durch ähnliche bekannte Techniken. Bei Rohren, die aus einzelnen Teilstücken zusammengesetzt sind, lassen sich diese ebenfalls über übliche Techniken, wie z. B. Hartlöten, Schweißen oder andere mechanische Verbindungstechniken miteinander verbinden.

Die einzelnen Rohre können hierbei je nach Anforderungen über der Rohrlänge in ihrem Innendurchmesser variieren. Auch die Querschnittsform des Innendurchmessers kann geeignet optimiert werden. So können die Rohre bspw. in geradlinigen Abschnitten einen kreisförmigen Innenquerschnitt aufweisen, während sie in gekrümmten Bereichen bspw. ellipsenförmig oder ellipsenähnlich ausgebildet sind.

Das sekundäre Kühlsystem, zu dem die Rohre das Kühlmedium führen, kann selbstverständlich die unterschiedlichsten bekannten Kühltechniken einsetzen, das heisst konvektive Kühlung, Prallkühlung oder Filmkühlung. Es kann in der Komponente selbst in bekannter Weise ausgeführt sein oder auch in oder an einer benachbarten Komponente.

### Kurze Beschreibung der Zeichnungen

Die vorliegende Erfindung wird nachfolgend anhand von Ausführungsbeispielen in Verbindung mit den Zeichnungen nochmals näher erläutert. Hierbei zeigen
- Fig. 1: ein erstes Beispiel für eine Ausgestaltung der Komponente mit der Kühlanordnung;
- Fig. 2: eine alternative Ausgestaltung der Komponente zum Zwecke der Kühlung des Schaufeldeckbands;
- Fig. 3: ein zweites Beispiel für eine Ausgestaltung der Komponente mit der Kühlanordnung
- Fig. 4: ein Beispiel für die Form eines eingesetzten Kühlrohres;
- Fig. 5: das Rohr der Figur 4 in drei unterschiedlichen Ansichten;
- Fig. 6: ein Beispiel für den Querschnitt des Rohres in einer Krümmung.

### Wege zur Ausführung der Erfindung

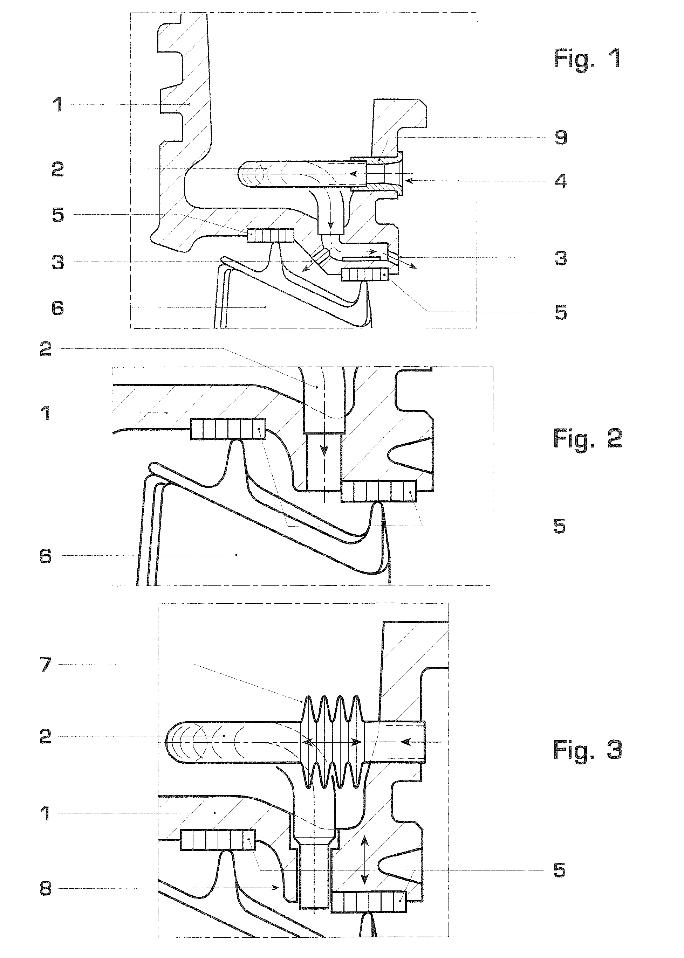

Figur 1 zeigt ein erstes Beispiel für eine Ausgestaltung der vorliegenden Komponente mit der Kühlanordnung. Die Kühlanordnung setzt sich in diesem Beispiel aus einem mehrfach gebogenen Rohr 2 zusammen, das mit seinem ersten Ende an einer Einlassöffnung 4 der Komponente, einem Hitzeschild 1, befestigt ist und die Kühlluft an einen am Heißgaspfad der Turbine liegenden Bereich der Komponente 1 leitet. Der Weg der Kühlluft ist durch die in der Figur dargestellten Pfeile angedeutet. Die Kühlluft tritt über die Öffnungen 3 in der Komponente 1 in den Heißgaspfad aus und kühlt diesen Bereich der Komponente von der Außenseite aus. Bei einem üblichen Aufbau einer Turbine sind selbstverständlich mehrere dieser Rohre über den Umfang des Heißgaspfades verteilt im Hitzeschild 1 angeordnet.

Durch die geschlossene Führung der Kühlluft in dem Rohr 2 werden die restlichen Teile der Komponente 1 nicht gekühlt, so dass deutlich geringere Temperaturgradienten in radialer Richtung in der Komponente auftreten. Da die Kühlluft auch nicht den gesamten Innenraum der Komponente 1 einnimmt, werden die Leckraten gegenüber einer derartigen Ausgestaltung deutlich reduziert. Das Rohr 2 ist im vorliegenden Beispiel über eine hartgelötete Hülse 9 in der Einlassöffnung 4 mit der Komponente 1 verbunden. An dem Bereich der Komponente 1, der am Heißgaspfad liegt, sind auch die Dichtungen 5 zu erkennen, in die Schaufelblattspitzen der Turbine während des Betriebs eingreifen.

Dies ist in der Figur 2 dargestellt, die einen Teil eines Schaufelblattes 6 der Turbine im Eingriff mit den Dichtungen 5 zeigt. In diesem Beispiel wird das Hitzeschild 1 nicht oder nur unwesentlich gekühlt. Vielmehr wird das Rohr 2 genutzt, um die Kühlluft direkt zur Kühlung der Spitze des Schaufelblattes 6 einzusetzen. Dies ist durch den in der Figur erkennbaren Pfeil veranschaulicht, der die aus dem Rohr 2 austretende Kühlluft andeutet, die auf die Spitze des Schaufelblattes 6 trifft.

Figur 3 zeigt ein weiteres Beispiel einer Ausgestaltung der vorliegenden Komponente, bei der das Rohr 2 einen als Faltenbalg 7 ausgebildeten Abschnitt im oberen Bereich aufweist, der eine axiale Ausdehnung des Rohres 2 ermöglicht. Diese axiale Ausdehnung kann erforderlich sein, um eine in gleicher Richtung aufgrund von Temperaturschwankungen hervorgerufene unterschiedliche Ausdehnung der Komponente 1 mitzumachen bzw. auszugleichen. In der Figur ist weiterhin auch eine Ausdehnungsmöglichkeit in radialer Richtung dargestellt, die durch ein Schiebegelenk 8 (slip joint) realisiert ist, durch die das Auslassende des Rohres 2 mit der Komponente 1 verbunden ist. Bei dieser Ausgestaltung ist auch eine durch das Schiebegelenk 8 bewirkte Reduzierung des Querschnittes des Rohres 2 zu erkennen, die zu höheren Ausströmungsgeschwindigkeiten der Kühlluft aus dem Rohr 2 führt.

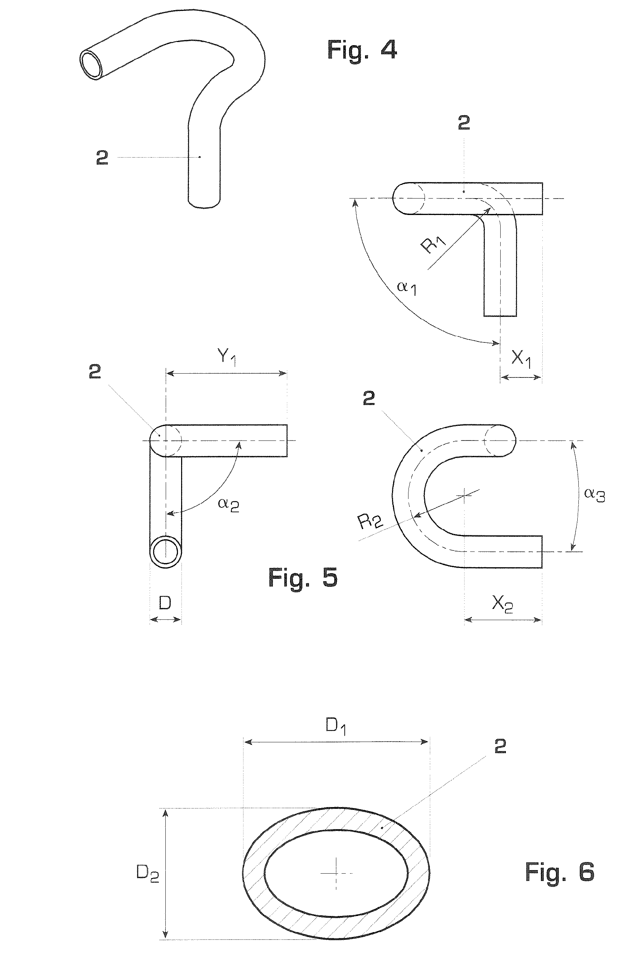

Bei den vorliegenden Beispielen weist das Rohr 2 eine zweifach gekrümmte Form auf, wie dies in der Figur 4 zu erkennen ist. Durch diese zweifach gekrümmte Form, bei der die Krümmungen in diesem Beispiel in zwei senkrecht zueinander stehenden Ebenen liegen, wird ebenfalls eine gewisse Flexibilität des Rohres 2 erreicht. Die prinzipiellen Möglichkeiten der Ausgestaltung einer derartigen doppelt gekrümmten Form werden anhand der Figur 5 verdeutlicht, die ein derartiges Rohr 2 mit entsprechenden Bemaßungen in 3 unterschiedlichen Ansichten zeigt. Für die in der Figur 5 erkennbaren Bemaßungen lassen sich in Abhängigkeit vom Außendurchmesser D des Rohres die folgenden Bereiche wählen: X1 = 0,2 - 50D, X2 = 0,2 -70D, Y1 = 0, 2 - 90D, R1 = 0, 5 - 10D, R2 = 0, 5 - 10D, α1 = 2° - 170°, α2 = 2° - 170° und α3 > 10°. Diese Abmessungen werden dabei je nach Form der Komponente 1 sowie der gewünschten Führung der Kühlluft in der Komponente gewählt. Der Innendurchmesser des Rohres bewegt sich dabei in einer Größenordnung von ≥ 4mm bis vorzugsweise maximal 70mm. Die Wanddicke kann hierbei beliebig gewählt werden.

Figur 6 zeigt schließlich beispielhaft einen Querschnitt des Rohres 2, wie er in einer Krümmung gewählt werden kann. Grundsätzlich lässt sich das Verhältnis zwischen dem Durchmesser D2 und dem Durchmesser D1 des Rohres 2 abhängig vom jeweiligen Rohrabschnitt in den Bereichen D1/D2 = 0,4 - 1,6 variieren.

### Bezugszeichenliste

- 1: Hitzeschild
- 2: Rohr
- 3: Öffnungen
- 4: Einlassöffnung
- 5: Dichtungen
- 6: Schaufelblatt
- 7: Faltenbalg
- 8: Schiebekupplung
- 9: Hülse

## Patentansprüche

1. Komponente einer Turbomaschine, insbesondere einer Gasturbine, mit einer Kühlanordnung, die zumindest einen Kühlkanal zur Durchführung eines Kühlmediums an oder in der Komponente (1) aufweist,
**dadurch gekennzeichnet,**
**dass** der Kühlkanal durch ein Rohr (2) mit einem Innendurchmesser von ≥ 4 mm gebildet wird, das an der Komponente (1) befestigt ist.

2. Komponente nach Anspruch 1,
**dadurch gekennzeichnet,**
**dass** das Rohr (2) an der Komponente (1) angelötet, angeschweißt oder angeklebt ist.

3. Komponente nach Anspruch 1,
**dadurch gekennzeichnet,**
**dass** zumindest einzelne Rohrabschnitte flexibel ausgebildet sind, um betriebsbedingte Deformationen der Komponente (1) auszugleichen.

4. Komponente nach Anspruch 3,
**dadurch gekennzeichnet,**
**dass** das Rohr (2) helix- oder spiralförmig verläuft, um betriebsbedingte Deformationen der Komponente (1) auszugleichen.

5. Komponente nach Anspruch 3,
**dadurch gekennzeichnet,**
**dass** ein oder mehrere Rohrabschnitte einen Faltenbalg (7) bilden, um betriebsbedingte Deformationen der Komponente (1) auszugleichen.

6. Komponente nach Anspruch 1,
**dadurch gekennzeichnet,**
**dass** ein oder mehrere Rohrabschnitte über ein Schiebegelenk (8) miteinander oder mit der Komponente (1) verbunden sind, um betriebsbedingte Deformationen der Komponente (1) auszugleichen.

7. Komponente Anspruch 1,
**dadurch gekennzeichnet,**
**dass** gekrümmte Rohrabschnitte einen überwiegend ellipsenförmigen und gerade Rohrabschnitte einen überwiegend kreisförmigen Innenquerschnitt aufweisen.

8. Komponente nach Anspruch 1,
**dadurch gekennzeichnet,**
**dass** das Rohr (2) zumindest zwei gekrümmte Rohrabschnitte aufweist, von denen ein erster Rohrabschnitt in einer ersten Ebene und ein zweiter Rohrabschnitt in einer zweiten Ebene liegen, wobei die beiden Ebenen einen Winkel zwischen 2° und 170° einschließen.

9. Komponente nach Anspruch 8,
**dadurch gekennzeichnet,**
**dass** die beiden Ebenen einen Winkel zwischen 80° und 100° einschließen.

10. Komponente nach Anspruch 8 oder 9,
**dadurch gekennzeichnet,**
**dass** der erste Rohrabschnitt eine Krümmung um 170° bis 190° und der zweite Rohrabschnitt eine Krümmung um 80° bis 100° aufweisen.

11. Komponente nach Anspruch 1,
**dadurch gekennzeichnet,**
**dass** mehrere der Rohre (2) an der Komponente (1) befestigt sind.

12. Komponente nach Anspruch 1 oder 11,
**dadurch gekennzeichnet,**
**dass** das oder die Rohre (2) in ein sekundäres Kühlsystem führen.

13. Anwendung einer Komponente nach einem oder mehreren der Ansprüche 1 bis 12 als Hitzeschildsegment für eine Gasturbine.
